# EUROPÄISCHE PATENTSCHRIFT

(11) **EP 3 458 389 B1**
(45) Veröffentlichungstag und Bekanntmachung des Hinweises auf die Patenterteilung: **08.12.2021**
(21) Anmeldenummer: 17714422.7
(22) Anmeldetag: 29.03.2017
(51) Int. Cl.: B65G 54/02, A22C 17/00, B26D 7/32

(54) **TRANSPORTMOVER UND VORRICHTUNG MIT TRANSPORTMOVER**
TRANSPORT MOVER, AND APPARATUS COMPRISING A TRANSPORT MOVER
ORGANE DE TRANSPORT ET APPAREIL AVEC ORGANE DE TRANSPORT

(30) Priorität: 23.05.2016 DE 102016109435
(43) Veröffentlichungstag der Anmeldung: 27.03.2019
(73) Patentinhaber: Weber Maschinenbau GmbH Breidenbach, 35236 Breidenbach (DE)
(72) Erfinder: CLÖSSNER, Stephan, 35630 Ehringshausen (DE); ECKHARDT, Christoph, 35236 Breidenbach (DE); KUHMICHEL, Christoph, 57334 Bad Laasphe (DE); ROTHER, Ingo, 35236 Breidenbach (DE); VON KEUDELL, Leopold, 88682 Salem (DE); ZECHER, Steffen, 35460 Staufenberg (DE)
(74) Vertreter: Manitz Finsterwald Patent- und Rechtsanwaltspartnerschaft mbB
(86) Internationale Anmeldenummer: PCT/EP2017/057403
(87) Internationale Veröffentlichungsnummer: WO 2017/202528

(56) Entgegenhaltungen:
- EP-A1- 1 530 541
- EP-A1- 1 530 541
- EP-A2- 1 747 844
- EP-A2- 1 747 844
- WO-A1-2014/190834
- WO-A1-2014/190834
- US-A- 5 579 890
- US-A- 5 579 890
- US-B1- 6 326 708
- US-B1- 6 326 708

## Beschreibung

Die vorliegende Erfindung betrifft eine Vorrichtung zum Transport von Objekten mit wenigstens einem Transportmover und einem Bahnsystem für die Transportmover, in welchem die Transportmover entlang wenigstens einer Bahn in einer Transportrichtung bewegbar sind, und mit einer Steuereinrichtung zur Steuerung der Bewegungen der Transportmover in dem Bahnsystem. Insbesondere bei der Produktion von Ein- oder Mehrsorten-Packungen, die eine oder mehrere Portionen aus beispielsweise Wurst- und/oder Käsescheiben enthalten, werden Fördersysteme benötigt, um die mittels einer oder mehrerer Aufschneidevorrichtungen, insbesondere so genannter Slicer, erzeugten und Portionen oder Teilportionen bildenden Lebensmittelscheiben einer Verpackungsvorrichtung zuzuführen. Beispielsweise sind Vorrichtungen zum Transport von Objekten aus US 6 326 708 B1, US 5 579 890 A, WO 2014/190834 A1, EP 1 747 844 A2 und EP 1 530 541 A1 bekannt.

WO 2014/190834 A1 offenbart eine Vorrichtung nach dem Oberbegriff des Anspruchs 1.

Das Fördersystem dient in der Praxis nicht lediglich dem Transport der Portionen vom Slicer zur Verpackungsvorrichtung, sondern hat zusätzliche, von der jeweiligen Anwendung abhängige Funktionen zu erfüllen, die dem Fachmann grundsätzlich bekannt sind und von denen an dieser Stelle lediglich beispielhaft die Pufferung und die Formatbildung entsprechend den Anforderungen einer Verpackungsvorrichtung genannt werden sollen. Unmittelbar im Anschluss an den Slicer können außerdem Portionierungs- sowie Komplettierungsaufgaben zu erfüllen sein. Ferner werden die Portionen in der Praxis meist gewogen.

Eine immer größer werdende Bedeutung kommt zudem einem so genannten Mehrspurbetrieb zu, bei dem mehrere Lebensmittelprodukte gleichzeitig mittels eines Slicers aufgeschnitten werden. Das nachgeordnete Fördersystem muss zu einem derartigen Mehrspurbetrieb und vor allem dazu in der Lage sein, aus den in der jeweiligen Anzahl von Spuren erzeugten Portionen diejenigen auch als Formatsätze bezeichneten Formate zu bilden, die von der nachgeordneten Verpackungsvorrichtung angefordert werden bzw. verarbeitet werden können.

Diese und weitere Aufgaben eines Fördersystems auf dem Gebiet der Handhabung von Portionen aus mittels Slicern von insbesondere laib- oder stangenförmigen Lebensmittelprodukten abgetrennten Scheiben werden derzeit mit Förderbandsystemen zufriedenstellend gelöst. Allerdings sind Förderbandsysteme mit einem hohen mechanischen Aufwand verbunden. Problematisch insbesondere im Hinblick auf den geforderten schonenden Transport der Portionen sind außerdem z.B. die Übergänge zwischen aufeinanderfolgenden Förderbandabschnitten. Des Weiteren lassen sich mit Förderbändern naturgemäß nur gerade Förderstrecken oder aus geradlinigen Abschnitten bestehende Förderstrecken realisieren, d.h. die Flexibilität bei der Auslegung einer Förderstrecke ist bei Förderbandsystemen begrenzt. Genauso sind die Möglichkeiten der gesamten Anlage begrenzt, z.B. bezüglich der zu verarbeitenden Produkte und der Portions- und Formatsatzbildungsmöglichkeiten. Außerdem ist in Verbindung mit im Lebensmittelbereich eingesetzten Förderbandsystemen ein vergleichsweise hoher Aufwand bei der Reinigung erforderlich, um die hohen Hygienestandards einhalten zu können.

Bekannt ist auch eine Transportvorrichtung mit einer Mehrzahl individuell bewegbarer oder jeweils als zusammengeschlossene Einheit bewegbarer Transportmover zum Transport der Portionen, und mit einem Bahnsystem für die Transportmover, in welchem die Transportmover entlang wenigstens einer vorgegebenen Bahn in einer Transportrichtung bewegbar sind. Eine Steuereinrichtung steuert hierbei die Bewegungen der Transportmover in dem Bahnsystem.

Eine derartige Transportvorrichtung hat gegenüber herkömmlichen Förderbandsystemen viele Vorteile. So können die Portionen beispielsweise von der Aufnahme bis zur Abgabe ohne eine weitere Portionsübergabe transportiert werden. Im Vergleich dazu weisen Förderbandsysteme viele Übergänge zwischen einzelnen Bändern auf. Diese Übergänge können die Portionen, z.B. deren Aufbau oder Struktur, negativ beeinflussen. Durch das Bahnsystem werden Portionsübergaben vermieden oder wenigstens minimiert. Ferner können Sensoren eingespart werden, welche z.B. als Lichtschranken zur Überprüfung der Lagen der Portionen bei Förderbandsystemen notwendig sind.

Die Transportmover und die Transportvorrichtung sind in ihrer Anwendbarkeit nicht auf Lebensmittelprodukte begrenzt. Sie können auch für den Transport von anderen Produkten verwendet werden, so dass hierin allgemein von Objekten die Rede ist.

Die Transportmover umfassen jeweils zumindest einen mit dem Bahnsystem zusammenwirkenden Läufer und wenigstens einen am Läufer angebrachten Träger für die Objekte, wie etwa die erwähnten Portionen. Vorzugsweise transportiert jeder Transportmover bzw. jede Transportmover-Einheit direkt oder indirekt auf dem Träger ein Objekt. Alternativ können auch mehrere Objekte auf einem Träger aufgenommen werden, welche dann z.B. in Fahrtrichtung hintereinander liegen. Auch können mehrere, z.B. zwei unmittelbar aufeinander folgende, Transportmover gemeinsam ein oder mehrere Objekte transportieren. Weiterhin kann ein Halter für Portionsträger zum Einsatz kommen, welcher zur Aufnahme von zumindest einem Träger geeignet ist und an einem Transportmover oder einer Transportmover-Einheit fixiert ist.

Ein für diesen Zweck grundsätzlich verwendbares Transportsystem, auf das hiermit im Hinblick auf das Erfordernis der Ausführbarkeit ausdrücklich Bezug genommen wird, wird von der Firma MagneMotion Inc. mit Sitz in Devens, Massachusetts, USA, angeboten. Dieses System basiert auf einem sogenannten LSM-Antrieb, also auf einem Antrieb durch lineare Synchronmotoren, der von einem sogenannten linearen Induktionsmotor (LIM-Antrieb) zu unterscheiden ist. Im Unterschied zu einem LIM-Antrieb wird bei einem LSM-Antrieb ein Magnetfeld nicht mittels des sogenannten elektromagnetischen Wanderfeldes induziert, sondern das Magnetfeld wird durch Permanentmagnete bereitgestellt. Wenn der Läufer des Linearmotors die Permanentmagnete trägt und der Stator des Linearmotors das elektromagnetische Wanderfeld erzeugt, dann kann man sich das Antriebsprinzip eines LSM-Antriebs bildlich so vorstellen, dass der mit dem Permanentmagneten versehene Transportmover von dem sich längs des Stators bewegenden Magnetfeld über die Transportstrecke gezogen wird. Ein solches Transportsystem bzw. Antriebsprinzip ist beispielsweise in WO 2003/029651 A2 und WO 2010/085670 A1 beschrieben. Auf diese Dokumente wird hiermit bezüglich der Offenbarung eines möglichen Antriebs- bzw. Funktionsprinzips für die Erfindung ausdrücklich Bezug genommen.

Insbesondere für spezielle Anwendungen kann es wünschenswert sein, dass die Transportmover mit einer zusätzlichen Einrichtung versehen sind, die den Transport, die Verarbeitung und/oder die Handhabung der transportierten Objekte erleichtert.

Der vorliegenden Erfindung liegt daher die Aufgabe zugrunde, einen Transportmover bereitzustellen, der im Hinblick auf den Transport, die Verarbeitung und/oder die Handhabung der transportierten Objekte verbesserte Eigenschaften aufweist.

Die Aufgabe wird durch eine Vorrichtung mit den Merkmalen des Anspruchs 1 gelöst. Bevorzugte Weiterbildungen und Ausführungsformen der Erfindung sind in den abhängigen Ansprüchen angegeben.

Die Aufgabe wird insbesondere dadurch gelöst, dass ein Transportmover der eingangs genannten Art dadurch weitergebildet wird, dass dessen Träger wenigstens eine Durchbrechung, insbesondere einen Schlitz, für den Eingriff einer Bearbeitungseinrichtung, wie etwa ein Messer oder eine Handhabungseinrichtung, aufweist. Durch die Durchbrechung, insbesondere durch den Schlitz, wird ein Freiraum im Träger geschaffen und somit eine verbesserte Zugangsmöglichkeit zu dem Objekt bereitgestellt. Das Objekt kann dadurch z.B. leichter durchtrennt werden, insbesondere mittels eines Trennmessers, oder leichter aufgenommen werden, insbesondere mittels eines Greifers. Bei der Durchbrechung kann es sich auch um ein Loch, z.B. für Stanzungen, handeln.

Bevorzugt verläuft der Schlitz zumindest abschnittsweise in Transportrichtung oder senkrecht zur Transportrichtung durch eine Auflagefläche des Trägers, insbesondere in der Mitte der Auflagefläche, auf welcher das Objekt während des Transports aufliegt. Der Schlitz kann sich somit direkt unterhalb des Objekts befinden, wodurch der Zugang zum Objekt verbessert wird.

Bei dem Schlitz kann es sich um einen durchgehenden Schlitz handeln, der sich von der die Auflagefläche bildenden Oberseite bis zur Unterseite des Trägers erstreckt. Der Schlitz kann auch nur als Nut ausgeführt sein und sich somit ausgehend von der Oberseite nicht ganz bis zur Trägerunterseite erstrecken. Ein Herabfallen von Material durch den Schlitz hindurch kann somit vermieden werden.

Nach einer bevorzugten Weiterbildung, kann der Träger eine Kante aufweisen, welche als eine zum Zusammenwirken mit einem Messer vorgesehene Gegenschneide ausgebildet ist. Somit kann z.B. ein Lebensmittelprodukt mittels eines Trennmessers durchtrennt werden, während es auf dem Träger aufliegt und im Schneidbereich unterstützt wird.

Die Kante kann sich an einem äußeren Rand der Auflagefläche des Trägers oder am Rand eines durch die Auflagefläche verlaufenden Schlitzes befinden. Je nach gewünschter Anwendung kann sich die Gegenschneide somit am äußeren Rand oder innerhalb der Auflagefläche befinden. Dies schließt Durchbrechungen mit ein, mit denen zum Beispiel Ausstanzungen am transportierten Objekt vorgenommen werden können.

Vorzugsweise ist die Kante aus einem anderen Material als die übrige Auflagefläche ausgebildet. Das Material kann im Hinblick auf das Zusammenwirken mit dem Messer oder in Bezug auf den Schneidvorgang ausgewählt sein.

Die die Gegenschneide bildende Kante kann eine andere Kontur aufweisen als die übrigen, insbesondere äußeren, Kanten der Auflagefläche. Die Kontur der die Gegenschneide bildenden Kante kann insbesondere an den Schneidvorgang angepasst und optional auch auswechselbar gestaltet sein.

Nach einer bevorzugten Weiterbildung der Erfindung, kann der Transportmover wenigstens teilweise die Energie oder den Verfahrweg zur Ausführung eines Arbeitsschrittes einer Einrichtung, mit der der Transportmover zusammenwirkt, bereitstellen. Bei der Einrichtung kann es sich beispielsweise um eine Arbeitsstation, wie etwa eine Station mit einem Schneidmesser handeln, wobei der Transportmover die Bewegungsenergie bereitstellt, um das transportierte Objekt an dem Messer vorbeizufahren und dabei zu durchtrennen. Der Transportmover kann daher selbst den Vorschub für die jeweilige Einrichtung, wie etwa die genannte Schneideinrichtung, bereitstellen. Eine Bewegungsachse an einer Arbeitsstation wird somit über die Transportmover-Bewegung bereitgestellt.

Nach einer Weiterbildung der Erfindung, kann der Träger zur Aktivierung einer, insbesondere den Träger beladenden oder entladenden, Station ausgebildet sein. Die Aktivierung der Station kann insbesondere mechanisch erfolgen, zum Beispiel durch die Bewegung des Transportmovers oder durch einen Impuls, den der Transportmover auf eine Einrichtung zur Detektion des Impulses überträgt. Eine von der Station vorzunehmende Tätigkeit kann somit vom Transportmover ausgelöst werden, bspw. wenn dieser in den Arbeitsbereich der Station gelangt.

Nach einer Weiterbildung der Erfindung, kann der Träger eine detektierbare Kennung, zum Beispiel eine spezielle Außenkantenkontur oder einen Transponder, wie beispielsweise einen RFID-Chip, aufweisen. Über eine derartige mechanische oder elektronische Kennung kann die Aktivierung der Station erfolgen. Es ist optional möglich, mittels Sensorik auf einem Träger erfasste Daten auch für den Betrieb einer Station zu verarbeiten. Im Falle einer transportierten Lebensmittelportion könnten Daten zur Schneidfähigkeit der Produkte, wie Temperatur, Konsistenz, Gewicht oder Abmessungen, auch von der Aufschneidemaschine als Betriebsparameter berücksichtigt werden.

Nach einer Weiterbildung der Erfindung, können wenigstens zwei Trägerteile die Auflagefläche bilden und der Träger kann eine Verstelleinrichtung für die Trägerteile aufweisen, mittels welcher die Trägerteile zum Teilen der Auflagefläche auseinandergefahren und zum Bilden einer durchgehenden Auflagefläche zusammengefahren werden können. Der Transportmover kann somit einen geteilten Portionsträger bzw. zwei Träger, die durch eine geeignete Mechanik zusammengefahren werden können, aufweisen.

Nach einer Weiterbildung der Erfindung, weist der Träger, insbesondere an der Auflagefläche für das Objekt, eine detektierbare Markierung zum Erfassen der Position des Trägers und insbesondere der Position der Auflagefläche auf. Dadurch wird eine genaue Erfassung der Position und/oder der Art des Trägers möglich. Eine genaue Ablage des Objekts auf der Auflagefläche des Trägers kann dadurch realisiert werden. Vorzugsweise umfasst der Transportmover eine, insbesondere von einer Erfassungseinrichtung für die Markierung ansteuerbare, Verstelleinrichtung zum Einstellen der Position der Auflagefläche. In Abhängigkeit von einer detektierten Position der Auflagefläche kann die Position mittels der Verstelleinrichtung in eine Soll-Position gebracht werden. Die Auflagefläche kann somit genau positioniert werden. Dadurch können geringere Anforderungen an die Genauigkeit der Bahn gestellt werden.

Mittels der Markierung kann außerdem eine Zuordnung der Markierung zu einer Einrichtung, zum Beispiel eine Arbeitsstation oder ein Funktionsbereich, erfolgen, und es kann in Abhängigkeit von der Detektion der Markierung eine vordefinierte Aktion, die die Einrichtung ausführt, ausgelöst werden.

Nach einer Weiterbildung der Erfindung, kann der Träger eine Aufnahme für wenigstens ein Objekt aufweisen, wobei die Aufnahme, insbesondere deren Form, an das Objekt, insbesondere an dessen Form, angepasst ist. Dadurch kann der Transport des Objekts verbessert und die Handhabung des Objekts, zum Beispiel beim Be- oder Entladen, vereinfacht werden.

Die Aufnahme kann auswechselbar am Träger befestigbar sein, insbesondere auf der Auflagefläche des Trägers. Die Aufnahme kann somit ausgewechselt werden, zum Beispiel bei einer Umstellung auf andere zu transportierende Objekte.

Es kann auch vorgesehen sein, dass die Aufnahme mitsamt Träger auswechselbar an zumindest einem Läufer anbringbar oder angebracht ist. Dadurch kann ebenfalls eine schnelle Umstellung auf andere zu transportierende Objekte realisiert werden.

Die Aufnahme kann mit dem Träger lösbar verbunden sein. Die Aufnahme gehört dann zum Hygienebereich am Träger und kann zusammen mit diesem oder auch separat gereinigt werden.

Der Portionsträger, insbesondere die Auflagefläche des Trägers, auf der die Aufnahme angebracht werden kann, kann als Abgrenzung nach unten dienen und schützt damit auch die Bahn vor Produktresten bzw. Verschmutzung. Der Portionsträger kann somit einen produktnahen Hygienebereich bilden, zu dem auch die Aufnahme gehört.

Zum Halten der Aufnahme am Träger können Magnete verwendet werden. Die Fixierung der Aufnahme am Träger kann somit mittels einer Magnethalterung erfolgen. Dadurch kann eine glatte, leicht zu reinigende Oberfläche der Auflagefläche des Trägers beibehalten werden.

Die Aufnahme kann auch über eine andersartige lösbare Verbindung am Träger befestigbar sein, beispielsweise über eine Klemmverbindung.

An der Aufnahme kann auch eine Klemmvorrichtung zum Fixieren des Objekts vorgesehen sein. Die Klemmvorrichtung kann mittels einer externen Einrichtung betätigbar sein. Die Klemmvorrichtung kann mittels eines extern lösbaren Federsystems zugehalten werden.

Nach einer Weiterbildung der Erfindung, können der Träger, die Aufnahme und/oder der Läufer eine jeweilige detektierbare Kennung zu ihrer Identifikation aufweisen, insbesondere in Form eines Transponders, vorzugsweise einen RFID-Chip. Dadurch kann eine aktive oder passive Identifikation und Zuordnung im Bahnsystem erfolgen und insgesamt die Handhabung und der Transportvorgang verbessert werden.

Auf der Kennung können Informationen bezüglich des Transportmovers, bezüglich des Bahnsystems und/oder bezüglich des transportierten Objekts gespeichert sein. Es können somit aktuelle Daten zum Betrieb bzw. zum Objekt auf dem Transponder gespeichert sein. Außerdem ist es möglich, eine Historie über den Betrieb bezüglich der bereits transportierten Objekte zu speichern. Es können zum Beispiel die Umläufe des Transportmovers im Bahnsystem gespeichert sein. Oder es können die Betriebszeiten des Transportmovers gespeichert sein. Weiterhin können die auf dem Transportmover angebrachten Aufbauten, insbesondere die angebrachten Aufnahmen für Objekte oder Angaben dazu, gespeichert sein. Es können Verschleißdaten gespeichert sein. Es kann gespeichert sein, wann und wie der Transportmover gereinigt wurde. Es kann gespeichert sein, wo welches Objekt vom Träger des Transportmovers abgenommen wurde. Es kann gespeichert sein, welche Stationen der Transportmover durchlaufen hat oder durchlaufen muss, einschließlich des Zeitpunkts des Durchlaufs.

Bei der Kennung kann es sich um einen Barcode handeln. Über die Kennung kann es möglich sein, jeden Transportmover bzw. jeden Träger eindeutig zu identifizieren, um zum Beispiel eine darauf abgestimmte Behandlung, zum Beispiel bezüglich einer Reinigung, einzuleiten.

Die Aufnahme für Objekte oder andersartige Wechselteile am Träger können mit dem zugeordneten Träger oder mit dem gesamten Transportmover eine Schnittstelle bilden. Insbesondere wird mit dieser Schnittstelle eine sichere Lagerung für die Bewegung im Förderbetrieb, d.h. in Transportrichtung, für den Träger gewährleistet. Trotzdem kann der Träger in der Schnittstelle drehbeweglich oder vertikal beweglich, insbesondere für Entnahmearbeiten und Hub, z.B. an einem Picker, gelagert sein.

Nach einer Weiterbildung der Erfindung weist die Auflagefläche des Trägers eine gummierte und/oder metallene Oberfläche und/oder eine strukturierte Oberfläche auf, und/oder die Auflagefläche des Trägers umfasst eine Anti-Haftbeschichtung, zum Beispiel aus Teflon. Die Auflagefläche kann somit eine Oberfläche aufweisen, die hohe hygienische Standards erfüllt und leicht zu reinigen ist. Außerdem ist die Gefahr einer Anhaftung eines Lebensmittelprodukts gering, und das transportierte Objekt verrutscht normalerweise nicht während des Transports.

Nach einer Weiterbildung der Erfindung ist der Träger, insbesondere ein die Auflagefläche aufweisender Bereich des Trägers, aus einem Kunststoff-Metall-Verbund und/oder aus einem Wärme oder Kälte speichernden Material ausgebildet. Durch den Kunststoff-Metall-Verbund kann ebenfalls eine vorteilhafte Oberfläche realisiert werden. Mittels des Wärme oder Kälte speichernden Materials ist eine Temperierung des transportierten Objekts möglich.

Die Auflagefläche des Trägers kann von einem Gitter, insbesondere aus Metall oder Kunststoff, gebildet werden. Das Gitter lässt sich leicht reinigen.

Die Auflagefläche des Trägers kann auswechselbar an einer darunterliegenden Halterung, insbesondere an einer darunterliegenden Oberfläche, des Trägers, angeordnet oder anordenbar sein. Die Auflagefläche kann somit zum Beispiel zu Reinigungszwecken vom Träger getrennt und durch eine neue, gereinigte Auflagefläche ersetzt werden. Dabei kann die Auflagefläche mittels einer Schnellbefestigung oder einer Selbstklemmung an der Halterung befestigbar sein, z.B. um eine schnelle Austauschbarkeit zu realisieren. Die Auflagefläche kann von einem flachen, plattenartigen Gebilde gebildet werden, dessen Oberseite die eigentliche Auflagefläche bildet.

Nach einer Weiterbildung der Erfindung, weist der Transportmover eine Fixiereinrichtung zur Fixierung des wenigstens einen Objekts am Träger, insbesondere an dessen Auflagefläche, auf. Das Objekt kann somit für den Transport am Transportmover befestigt werden. Dadurch lassen sich größere Beschleunigungs- und Verzögerungswerte für den Transportmover realisieren. Insbesondere können Bahnkurven schneller durchfahren werden, da die auf das Objekt wirkenden Fliehkräfte von der Fixiereinrichtung kompensiert werden können.

Die Fixiereinrichtung kann zwischen einer Fixierstellung, in welcher das Objekt fixiert wird, und einer Freigabestellung, in welcher das Objekt freigegeben ist, verstellbar sein.

Es kann vorgesehen sein, dass die Fixiereinrichtung nur über eine Teilstrecke des Bahnsystems das Objekt fixiert, während die Fixiereinrichtung über die verbleibende Teilstrecke nicht aktiv ist und eventuell sogar entfernt vom Objekt am Transportmover vorgehalten wird. Das Objekt ist dann gut zugänglich, zum Beispiel zur Entladung bzw. Abgabe.

Die Fixiereinrichtung kann als eine Art Taster oder als Bügel ausgestaltet sein, der über das Objekt bringbar ist, um es an der Auflagefläche zu fixieren.

Die Fixiereinrichtung kann ein Bimetall oder ein Federblech aufweisen.

Die Fixiereinrichtung kann am Träger angebracht, insbesondere angelenkt, sein.

Die Fixiereinrichtung kann lösbar am Träger befestigbar sein. Nachdem sie nicht mehr zur Fixierung des Objekts am Träger benötigt wird, kann sie entfernt werden. Dadurch ist eine einfache Reinigung und/oder Desinfektion des Trägers und/oder der Fixiereinrichtung möglich.

Die Fixiereinrichtung kann zur Fixierung einer Haube, welche zur Abdeckung des Objekts verwendet wird, am Träger verwendet werden.

Die Fixiereinrichtung kann am Portionsträger vorgespannt sein. Nach dem Aufnehmen des Produkts kann die Vorspannung die Fixiereinrichtung, zum Beispiel von oben her, gegen das Objekt drücken, um es gewissermaßen zwischen der Fixiereinrichtung und der Auflagefläche einzuklemmen.

Die Fixiereinrichtung kann durch einen Einfluss von außen, zum Beispiel durch eine externe Krafteinwirkung, etwa durch einen im Bahnbereich angeordneten Bolzen, der während der Bewegung des Transportmovers längs der Bahn in Kontakt mit der Fixiereinrichtung kommt, oder mittels eines Magnetfelds, betätigbar sein, also von der Freigabestellung in die Fixierstellung, oder umgekehrt, bringbar sein.

Zur Betätigung der Fixiereinrichtung kann die Bewegungsenergie des fahrenden Transportmovers verwendet werden.

Zur Verstellung der Fixiereinrichtung zwischen der Freigabestellung und der Fixierstellung kann die Fixiereinrichtung um eine Achse verschwenkbar sein.

Ein Federsystem kann die Fixiereinrichtung in der Fixierstellung oder der Freigabestellung halten.

In der Freigabestellung befindet sich die Fixiereinrichtung vorzugsweise seitlich neben oder unter der Auflagefläche, um eine gute Zugänglichkeit der Auflagefläche zu gewährleisten.

In der Fixierstellung fixiert die Fixiereinrichtung das Objekt vorzugsweise von oben, so dass das Objekt zwischen der Fixiereinrichtung und der Auflagefläche eingeklemmt sein kann. Die Fixiereinrichtung kann das Objekt an wenigstens einer Seite fixieren.

Das Objekt kann durch Erzeugen eines Vakuums an dem Träger fixiert werden. Beispielsweise kann in der Auflagefläche zumindest eine Öffnung vorgesehen sein, die mit einer Vakuumpumpe verbunden ist. Wenn das Objekt über der Öffnung liegt, kann es bei Betätigung der Vakuumpumpe angesaugt und somit an der Auflagefläche fixiert werden. Die Erzeugung des Vakuums kann auch mit einem integrierten Gebläse erfolgen, das im Bereich der Öffnung ein Vakuum erzeugen kann. Das Vakuum kann auch mittels einer Membran erzeugt werden. Die Membran kann unter der Öffnung angebracht sein. Sie kann, beispielsweise durch die Fahrbewegung des Transportmovers oder durch eine Vorspannung, ausgelenkt werden, wodurch sich das von der Membran eingeschlossene Volumen erhöht und im Bereich der Öffnung das Vakuum zum Fixieren des über der Öffnung angeordneten Objekts erzeugt wird.

Weiterhin ist es denkbar, dass ein Objekt auf dem Träger angefroren und dadurch fixiert wird. Mit bekannten Frosteinrichtungen, insbesondere für ein Schockfrosten geeignet, ist dies möglich.

Nach einer Weiterbildung der Erfindung, ist die Auflagefläche des Trägers dazu ausgebildet, eine Auffangfläche, insbesondere für Flüssigkeiten, zu bilden und/oder ein Herablaufen von Flüssigkeit eines teilweise flüssigen Objekts von der Auflagefläche zu verhindern. Bei dem teilweise flüssigen Objekt kann es sich beispielsweise um Fisch, Fleisch oder marinierte Lebensmittelprodukte handeln. Eventuell vom Objekt abtropfende Flüssigkeit kann somit auf dem Träger gehalten werden, wodurch vermieden wird, dass die Flüssigkeit unkontrolliert abläuft.

Die Auflagefläche kann von einem umlaufenden, gegenüber der Auflagefläche erhöhten Rand begrenzt werden. Die Auflagefläche kann auch von einer wannenartig ausgestalteten Trägeroberfläche gebildet werden.

Besonders vorteilhaft ist es, wenn die Auflagefläche wenigstens eine verschließbare Ablauföffnung aufweist. Die Flüssigkeit kann somit kontrolliert abgelassen werden, z.B. an einer dafür vorgesehenen Station.

Die Ablauföffnung kann durch einen über einen Betätigungsmechanismus betätigbaren Verschluss verschließbar sein. In der Schließstellung kann der Verschluss in Richtung Öffnungsstellung federbelastet oder vorgespannt sein. Durch einen Einfluss von außen kann der Verschluss freigegeben werden und aus der Schließstellung in die Öffnungsstellung gelangen, um die Ablauföffnung zu öffnen. Der Betätigungsmechanismus für den Verschluss kann mit einer längs einer Teilstrecke der Bahn angebrachten Rampe zusammenwirken, derart, dass beim Überfahren der Rampe der Betätigungsmechanismus derart betätigt wird, dass er den federbelasteten oder vorgespannten Verschluss freigibt.

Der Betätigungsmechanismus kann magnetisch betätigbar sein.

Nach einer Weiterbildung der Erfindung, kann der Transportmover zur Temperierung der Auflagefläche des Trägers eine Wärme- und/oder Kälteeinrichtung aufweisen. Eine Temperierung des auf der Auflagefläche transportierten Objekts ist somit möglich.

Vorzugsweise umfasst die Wärme- und/oder Kälteeinrichtung einen Wärme- und/oder Kältespeicher, welcher vorzugsweise am Träger, insbesondere unter der Auflagefläche, angeordnet ist. Durch den Wärme- und/oder Kältespeicher kann eine Vortemperierung des auf der Auflagefläche liegenden Objekts erreicht werden.

Der Träger kann gesintert werden, wobei eine geeignete Speichermasse eingebracht wird. In einem relativ leichten und hygienegerechten Kunststoff kann dann zum Beispiel ein gut Wärme leitendes Material in Form eines Granulats eingebettet werden.

An der Unterseite des Trägers können Rippen zum Wärme- oder Kälteeintrag vorgesehen sein.

Die Wärme- und/oder Kälteeinrichtung und insbesondere der Wärme- und/oder Kältespeicher kann dauerhaft wirksam sein oder aber nur längs einer Teilstrecke der Bahn oder in einer Station, bei der eine Energiezufuhr von außen vorhanden ist. Optional kann ein Wärme- und/oder Kältespeicher auch lösbar in einen Träger integriert sein, so dass dieser in vorgebbaren Abständen ausgetauscht bzw. erneuert werden kann.

Nach einer Weiterbildung der Erfindung, kann der Transportmover eine Abdeckhaube zur Abdeckung der Auflagefläche des Trägers aufweisen. Durch die Abdeckhaube kann ein auf dem Träger liegendes Objekt während des Transports geschützt werden.

Die Abdeckhaube kann lösbar oder dauerhaft mit dem Träger verbunden sein. Zum Beispiel kann die Abdeckhaube mittels eines Scharniers verschwenkbar an der Auflagefläche des Trägers angebracht sein.

Die Abdeckhaube kann automatisiert, zum Beispiel durch die Fahrbewegung des Transportmovers und/oder an einer Station, geöffnet und geschlossen werden. Daher kann die Abdeckhaube optional auch mehrteilig ausgestaltet sein, so dass z.B. Segmente der Haube von mehreren Seiten her über die Auflagefläche geschwenkt werden können.

Die Abdeckhaube kann automatisiert, z.B. an einer Station, auf die Auflagefläche gesetzt bzw. von der Auflagefläche wieder abgenommen werden.

An der oberen, inneren Seite der Abdeckhaube kann ein Andrückelement angeordnet sein, welches das Objekt von oben her auf die Auflagefläche drückt. Die Abdeckhaube kann somit eine Niederhaltefunktion erfüllen.

Die Abdeckhaube kann außerdem eine seitliche Begrenzung für das auf der Auflagefläche liegende Objekt bereitstellen, wodurch das Objekt während des Transports nicht verrutschen kann.

An der Abdeckhaube kann auch zumindest eine Impfnadel für Lebensmittelprodukte oder zumindest eine Durchbrechung dafür angebracht bzw. ausgebildet sein. Dies umfasst ganz allgemein auch zumindest eine Zugangs- und Behandlungsöffnung, welche insbesondere mit einem selbsttätig verschließenden Mittel versehen ist, z.B. eine elastische, vorgespannte Lasche.

In der Abdeckhaube, insbesondere in deren Oberseite, kann eine Zugangsöffnung vorgesehen sein, zum Beispiel zur Zugabe einer Soße oder dergleichen.

Der Transportmover kann eine Einrichtung zur Einbringung eines Gases, insbesondere eines Inertgases, in das Volumen, welches die Abdeckhaube und die Auflagefläche umschließen, aufweisen.

Der Transportmover kann eine Einrichtung zur Erzeugung eines Vakuums in dem Volumen, welches die Abdeckhaube und die Auflagefläche umschließen, aufweisen. Das Objekt kann somit unter Vakuum transportiert werden.

Zur Erzeugung eines Vakuums und/oder zur Einbringung eines Inertgases kann an der Auflagefläche ein Ventil angebracht sein, über das die Evakuierung des Volumens bzw. die Einbringung des Gases erfolgen kann.

Die Abdeckhaube kann derart dimensioniert sein, dass deren Abmessungen optimal mit dem Rand und/oder einem Dichtbereich der Auflagefläche korrespondieren.

Zur Überwachung eines Zustands, insbesondere einer Temperatur und/oder eines Vakuums, in dem Volumen, welches die Abdeckhaube und die Auflagefläche umschließen, kann der Transportmover eine entsprechende Einrichtung, also insbesondere ein Druck- und/oder ein Temperaturmessgerät, aufweisen. Dies umfasst auch Hilfsmittel zum Anschließen von Messeinrichtungen zur Zustandserfassung von außen her, z.B. beim Durchfahren einer Station.

Nach einer Weiterbildung der Erfindung, umfasst der Transportmover eine Beleuchtung, vorzugsweise für den Träger, insbesondere für dessen Auflagefläche, wobei, bevorzugt die Beleuchtung unter der Auflagefläche des Trägers angeordnet ist.

Die Beleuchtung kann insbesondere derart einstellbar sein, dass sie eine optimale Erfassung des Trägers, insbesondere dessen Auflagefläche, erlaubt.

Die Beleuchtung korrespondiert mit einer Kamera bzw. einem Aufnahme- und/oder Erfassungsmittel und kann davon, also z.B. von der Kamera, ansteuerbar bzw. einstellbar sein, so dass die Beleuchtung zur optimalen Ausleuchtung des Kamerabilds einsetzbar ist. Die Beleuchtung kann derart ausgestaltet sein, dass zumindest ein Funktionspunkt auf der Auflagefläche beleuchtet wird. Vorteilhafterweise kann durch Einsatz der Beleuchtung eine einfachere Kameratechnik eingesetzt werden.

Die Beleuchtung der Auflagefläche erfolgt vorzugsweise von unten her. Daher ist es besonders vorteilhaft, wenn die Auflagefläche wenigstens teilweise transparent ausgestaltet ist.

Die Auflagefläche bzw. eine die Auflagefläche bildende dünne Platte kann beispielsweise aus einem lichtdurchlässigen Kunststoff ausgestaltet sein. In der Auflagefläche können Durchbrechungen und/oder Schlitze vorgesehen sein, um zumindest sequenzweise und/oder abschnittsweise einen guten Kontrast zu bieten.

Die Beleuchtung kann derart ausgestaltet sein, dass nur der äußere Bereich der Auflagefläche, in dem der Objektrand zu erwarten ist, beleuchtet wird. Dies kann zur Fehlererkennung oder Lageerfassung eingesetzt werden.

Neben dem Zusammenspiel mit einer Objekterfassungseinrichtung kann mit dem Einsatz eines Beleuchtungsmittels im Bereich der Auflagefläche auch das Anzeigen und Signalisieren im Zusammenhang mit dem transportierten Objekt erreicht werden. Z.B. werden fehlgewichtige Objekte für manuelle Nacharbeiten farbig markiert.

Nach einer Weiterbildung der Erfindung, weist der Transportmover eine Auflagefläche auf, welche zwischen einer ersten, insbesondere horizontalen, Stellung und einer zweiten Stellung verstellbar ist, wobei bevorzugt die zweite Stellung gegenüber der ersten Stellung geneigt ist.

Die Verstellung von der ersten Stellung, welche insbesondere die "normale" Stellung der Auflagefläche ist, in die zweite Stellung kann insbesondere zum Durchfahren einer Bahnkurve erfolgen. Die zweite Stellung entspricht dabei einer Stellung, bei welcher die Auflagefläche gegenüber der Horizontalen zum Kurveninneren hin geneigt ist. Dadurch kann die Kurve schneller durchfahren werden, da die auf das Objekt wirkenden Zentrifugalkräfte von der geneigten Auflagefläche wenigstens teilweise aufgenommen werden können.

Die Auflagefläche ist vorzugsweise um eine zumindest im Wesentlichen parallel zur Transportrichtung verlaufende Schwenkachse verschwenkbar. Dadurch kann auf einfache Weise eine Verstellung zwischen der ersten und der zweiten Stellung realisiert werden.

Die Erfindung betrifft eine Vorrichtung nach Anspruch 1, zum Transport von Objekten, insbesondere Portionen, die jeweils wenigstens eine von einem Lebensmittelprodukt, insbesondere mittels einer Aufschneidevorrichtung, insbesondere eines Hochgeschwindigkeitsslicers, abgetrennte Scheiben umfassen, wobei die Vorrichtung wenigstens einen Transportmover, ein Bahnsystem für die Transportmover, in welchem die Transportmover entlang wenigstens einer Bahn in einer Transportrichtung bewegbar sind, und eine Steuereinrichtung zur Steuerung der Bewegungen der Transportmover in dem Bahnsystem aufweist.

Die Vorrichtung kann eine Detektionseinrichtung zum Detektieren einer an einem der Transportmover angebrachten oder ausgebildeten Kennung oder Markierung umfassen. Mittels der Detektion der Kennung oder Markierung kann der Transportmover zum Beispiel einer Arbeitsstation oder einem Funktionsbereich zugeordnet werden, oder die Arbeitsstation oder der Funktionsbereich kann aktiviert werden. Oder die Arbeitsstation oder der Funktionsbereich können nach Objekt- und/oder produktspezifischen Daten eingestellt und betrieben werden. Z.B. können gespeicherte Informationen zur Schneidfähigkeit, wie z.B. Temperatur, Konsistenz, Abmessungen, Gewicht, usw., zum Betrieb einer Aufschneidevorrichtung verwendet werden.

Die Vorrichtung kann eine Positioniereinrichtung aufweisen, welche dazu ausgebildet ist, anhand der detektierten Markierung eines Transportmovers die Ist-Position der Auflagefläche des Trägers des Transportmovers zu bestimmen und diese in eine Soll-Position zu bringen, falls die Ist-Position von der Soll-Position abweicht. Die Auflagefläche des Trägers kann somit durch die Positioniereinrichtung genau positioniert werden.

Die Vorrichtung kann dazu ausgebildet sein, die detektierte Kennung oder Markierung einer Einrichtung, welche mit der Kennung oder Markierung assoziiert ist, zuzuordnen. Über die am Transportmover vorhandene Kennung oder Markierung kann somit eine Einrichtung, welche zum Zusammenwirken mit dem Transportmover vorgesehen ist, identifiziert werden. Eine Steuerung der Vorrichtung und/oder der Einrichtung kann somit zumindest teilweise über die an den Transportmovern angebrachten Kennungen oder Markierungen erfolgen.

Besonders vorteilhaft ist es, wenn zumindest eine Teilstrecke der Bahn durch eine Einhausung verläuft. In der Einhausung kann ein geschützter Transport der Objekte erfolgen. In der Einhausung kann eine Lüftungs-, Luftführungs- und/oder Klimatisierungseinrichtung vorgesehen sein. In der Einhausung kann auch eine Inertgas-Atmosphäre ausgebildet sein. Die Einhausung kann in Art einer Röhre oder in Art eines Tunnels, durch den die Teilstrecke der Bahn führt, ausgestaltet sein.

Die Vorrichtung kann wenigstens eine Einrichtung, wie etwa einen Greifroboter aufweisen, welche klimatisiert betreibbar ist. Auch andere Funktionsbereiche der Vorrichtung können klimatisiert betrieben werden. Dabei handelt es sich bei den Funktionsbereichen vorzugsweise um abgegrenzte Komponenten, welche mit einem eigenen Gestell, einer Einhausung und/oder einer Sicherheitsvorrichtung versehen sind. Ein Greifroboter benötigt beispielsweise aus Sicherheitsgründen ein Gehäuse um den Arbeitsbereich als Zugriffschutz. Dieser Innenraum kann somit relativ einfach klimatisiert und gekühlt werden.

Die Vorrichtung kann wenigstens eine Fördereinrichtung, insbesondere eine Zuführ- oder Überführeinrichtung, für Abdeckhauben aufweisen, welche zur Abdeckung der Auflagefläche der Träger der Transportmover vorgesehen sind.

Der Transportmover und/oder die Vorrichtung kann die Energie zur Ausführung eines Arbeitsschrittes einer Einrichtung, mit welcher der Transportmover und/oder die Vorrichtung zusammenwirken, bereitstellen. Bei einer Arbeitsstation, die ein Messer zur Durchtrennung von auf den Trägern der Transportmover liegenden Objekten aufweist, kann es beispielsweise vorgesehen sein, dass jeder Transportmover selbst den Vorschub für das Schneidmesser ausführt, während die Position des Schneidmessers unverändert bleibt. Der Vorschub kann durch die Bewegungsenergie des jeweiligen Transportmovers erfolgen. Alternativ kann im Bereich der Arbeitsstation ein Antrieb für die Transportmover vorgesehen sein, welcher die Transportmover im Bereich der Arbeitsstation längs der Bahn fördert, um den zum Beispiel für den Schneidvorgang erforderlichen notwendigen Vorschub zu realisieren.

Die Vorrichtung kann eine Beleuchtung für Bahnabschnitte und/oder zur Beleuchtung der Transportmover, insbesondere deren Auflagefläche, aufweisen.

Die Erfindung wird im Folgenden beispielhaft unter Bezugnahme auf die Zeichnungen beschrieben. Es zeigen, jeweils schematisch,
- Fig. 1: eine Querschnittsansicht eines Transportmovers und eines Bahnabschnitts,
- Fig. 2: eine Querschnittsansicht eines Trägers eines Transportmovers mit einer daraufliegenden Aufnahme,
- Fig. 3: eine Draufsicht auf den Träger von Fig. 2,
- Fig. 4: eine Querschnittsansicht eines Trägers mit einer Abdeckhaube,
- Fig. 5: eine Querschnittsansicht einer abgewandelten Variante eines Trägers mit einer Abdeckhaube,
- Fig. 6: eine Querschnittsansicht eines Transportmovers mit einem verstellbaren Träger,
- Fig. 7: eine Querschnittsansicht einer abgewandelten Variante eines Transportmovers mit einem verstellbaren Träger,
- Fig. 8: eine weitere Querschnittsansicht der Variante von Fig. 7,
- Fig. 9: eine Querschnittsansicht einer abgewandelten Variante eines Transportmovers mit einem verstellbaren Träger,
- Fig. 10: eine weitere Querschnittsansicht der Variante von Fig. 9, und
- Fig. 11: eine Querschnittsansicht einer weiteren abgewandelten Variante eines Transportmovers mit verstellbarem Träger.

Zunächst ist zu bemerken, dass die dargestellten Ausführungsformen rein beispielhafter Natur sind. Die Merkmale einer Ausführungsform können auch beliebig mit Merkmalen einer anderen Ausführungsform kombiniert werden.

Das im Folgenden beschriebene Ausführungsbeispiel der Erfindung basiert auf einem Antriebsprinzip für Mover in einem Bahnsystem durch lineare Synchronmotoren (LSM-Antrieb), wie es von der Firma MagneMotion Inc. angeboten wird. Beliebig viele Transportmover in einem beliebig komplexen Bahnsystem können mittels einer Steuereinrichtung individuell, d.h. unabhängig voneinander, im Bahnsystem bewegt und mittels der Steuereinrichtung lokalisiert und identifiziert werden. Ferner können die Transportmover im Bahnsystem mit extrem hoher Genauigkeit bewegt und positioniert werden. Die Bewegungsgeschwindigkeiten sowie Beschleunigungen und Verzögerungen für die Transportmover können ebenfalls beliebig und individuell gewählt und vorgegeben werden.

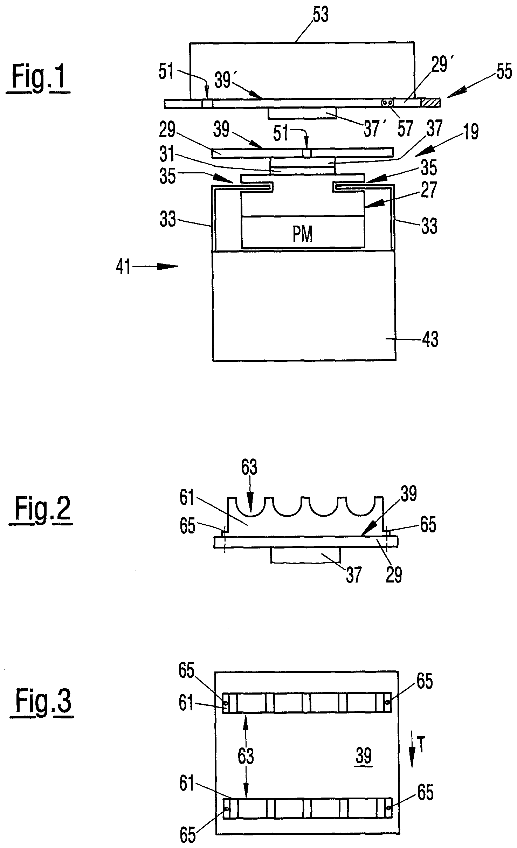

Einen Querschnitt, also einen Schnitt senkrecht zur Transportrichtung, durch eine Bahn mit darin angeordnetem Transportmover 19 zeigt Fig. 1. Ein Bahnabschnitt 41 des Bahnsystems umfasst eine als Stator 43 des LSM-Antriebs dienende Basis, die auch als mechanische Basis zur Anbringung des Bahnabschnitts 41, beispielsweise an einem Unterbau bzw. an wie auch immer gearteten Gestellen oder Halterungen, dient.

In Fig. 1 dargestellt ist ein Bahnabschnitt vom sogenannten U-Typ, d.h. der Bahnabschnitt ist nach oben offen und die Transportmover 19 befinden sich oberhalb des Stators 43.

Als Führung für den Transportmover 19 dienen hier als Winkelbleche ausgeführte Führungsschienen 33, die in Schlitzen 35 laufen, welche an den linken und rechten Seitenflächen eines Läufers 27 des Transportmovers 19 ausgebildet sind. Die Führungen des Bahnsystems für die Transportmover 19 können aber auch anders ausgestaltet sein.

Die Führung des Bahnsystems sorgt für eine definierte Relativposition des Läufers 27 bezüglich des Stators 43. Insbesondere wird hierdurch erreicht, dass eine Permanentmagnetanordnung PM des Läufers 27 einen exakt definierten Abstand zum Stator 43 einhält.

Gemäß dem LSM-Antrieb ist der mit der Permanentmagnetanordnung PM versehene Läufer 27 durch entsprechende Ansteuerung des Stators 43 mittels einer nicht dargestellten Steuereinrichtung in Transportrichtung längs des Stators 43 und somit in der den Stator 43 umfassenden Bahn bewegbar. Während dieser Bewegung wird der Läufer 27 durch die Führungsschienen 33 geführt. Auf dem Läufer 27 ist ein Träger 29 angeordnet, der eine beispielsweise ebene Auflagefläche 39 bereitstellt, um Objekte 53, insbesondere Lebensmittelportionen, zu transportieren.

Zwischen Träger 29 und Läufer 27 ist ein grundsätzlich beliebig ausgestalteter Halter 31 vorgesehen. Bei lösbarer Anbringung des Trägers 29 am Läufer 27 kann der Halter 31 als Bestandteil einer Kupplung ausgebildet sein bzw. einen Kupplungsabschnitt bilden, der mit einem entsprechenden Kupplungsabschnitt 37 des Trägers 29 zusammenwirkt. Das Zusammenwirken zwischen Läufer 27 und Halter 31 bzw. zwischen Halter 31 und Träger 29 kann grundsätzlich auf beliebige Art und Weise erfolgen. Es kann eine rein mechanische Verbindung vorgesehen sein. Es ist auch möglich, dass der Träger 29 am Halter 31 bzw. der Halter 31 am Läufer 27 magnetisch gehalten wird. Der Halter 31 kann auch dazu ausgebildet sein, Relativbewegungen des Trägers 29 relativ zum Läufer 27 zuzulassen, beispielsweise ein Verdrehen um eine vertikale Achse, um auf diese Weise Portionen drehen bzw. ausrichten zu können.

Der Träger 29 kann auch unmittelbar mit dem Läufer 27 verbunden sein. Der Halter 31 zwischen Träger 29 und Läufer 27 wird dann durch die zusammenwirkenden Bereiche bzw. Kupplungsabschnitte von Träger 29 und Läufer 27 gebildet.

Wie in Fig. 1 angedeutet ist, ermöglicht eine lösbare Anbringung des Trägers 29 am Halter 31 eine Verwendung des Läufers 27 mit unterschiedlichen, beispielsweise unterschiedlich großen Trägern 29. So zeigt Fig. 1 rein beispielhaft einen mit einem Kupplungsabschnitt 37' versehenen Träger 29', dessen Auflagefläche 39' größer ist als jene des in Fig. 1 am Läufer 27 angebrachten Trägers 29.

Der Transportmover kann in einer abgewandelten Variante zwei hintereinander angeordnete, miteinander gekoppelte Läufer 27 aufweisen, die beispielsweise zwei nebeneinanderliegende Träger 29 und/oder einen Halter 31 umfassen.

Unabhängig von der speziellen Ausgestaltung des Transportmovers 19 und/oder der Anzahl der Träger 29, 29' kann wenigstens einer der Träger 29, 29' einen insbesondere durchgehenden Schlitz 51 für den Eingriff einer Bearbeitungseinrichtung (nicht gezeigt) aufweisen, bei der es sich beispielsweise um ein Schneidmesser zur Durchtrennung eines auf der Auflagefläche 39, 39' liegenden Objekts 53 handeln kann. Der Schlitz 51 verläuft bei der in Fig. 1 dargestellten Variante längs der Transportrichtung, die senkrecht zur Bildebene verläuft. Er kann sich aber auch senkrecht zur Transportrichtung oder in einer anderen Richtung erstrecken. Mit durchgehendem Schlitz 51 ist insbesondere gemeint, dass sich dieser von der die Auflagefläche 39, 39' bildenden Oberseite des Trägers 29, 29' bis zur Unterseite des Trägers 29, 29' erstreckt.

Wie in Fig. 1 für den Träger 29' dargestellt ist, kann sich der Schlitz 51 in einem Randbereich des Trägers 29' erstrecken. Der Schlitz 51 kann allerdings auch mittig durch den Träger 29' verlaufen, was in Fig. 1 in Bezug auf den Träger 29 dargestellt ist.

Zusätzlich oder alternativ kann eine andere Art von Durchbrechungen am Träger vorgesehen sein, beispielsweise wenigstens ein Loch für Stanzungen (nicht dargestellt).

Wie in Fig. 1 bezüglich des Trägers 29' dargestellt ist, kann dieser eine Außenkante 55 aufweisen, welche als eine zum Zusammenwirken mit einem Messer vorgesehene Gegenschneide ausgebildet ist. Die Kante 55 befindet sich an einem äußeren Rand der Auflagefläche 39'.

Es kann jedoch auch ein Rand des Schlitzes 51 als Gegenschneide ausgestaltet sein. Die Kante 55 kann aus einem anderen Material als die übrige Auflagefläche 39' bzw. der verbleibende Träger 29' ausgestaltet sein.

Die Kante 55 kann auch eine andere Kontur aufweisen als die übrigen, äußeren Kanten der Auflagefläche 39, da die Kontur der Kante 55 zum Beispiel im Hinblick auf den von dem Messer durchgeführten Schneidvorgang optimiert sein kann.

Wie außerdem beispielhaft bezüglich des Träges 29' gezeigt ist, kann dieser eine detektierbare Kennung 57, die als RFID-Chip ausgestaltet sein kann, aufweisen. Mittels der Kennung 57 kann eine Identifikation des Trägers 29' erfolgen. Mittels der Kennung 59 kann auch eine Aktivierung einer Arbeitsstation, die von dem Transportmover 19 angefahren wird, erfolgen. Es kann auch eine Zuordnung des Transportmovers 19 bzw. des Trägers 29' zu der Arbeitsstation erfolgen, insbesondere falls eine wie auch immer ausgestaltete Bearbeitung oder Handhabung des Objekts 53 durch die Arbeitsstation vorgesehen ist.

Fig. 2 zeigt eine Querschnittsansicht eines Trägers 29 mit einer auf der Auflagefläche 39 des Trägers angeordneten Aufnahme 61. Die Aufnahme 61 weist beispielhaft eine wellenartige Kontur auf mit einzelnen, U-förmig ausgebildeten Aufnahmeabschnitten 63, deren Form beispielsweise an den Außenumfang einer stangenförmigen Wurst angepasst ist.

Fig. 3 zeigt eine Draufsicht auf die Auflagefläche 39. Wie dargestellt ist, können zwei Aufnahmen 61 zum Beispiel in Transportrichtung T des Transportmovers 19 gesehen in einem Abstand hintereinander angeordnet sein. Dabei kann in miteinander fluchtenden Aufnahmeabschnitten 63 der beiden Aufnahmen 61 jeweils eine stangenförmige Wurst eingelegt werden. Da die Wurst mit Abstand zur Auflagefläche 39 des Trägers 29 gelagert ist, kann diese relativ einfach für eine Entnahme untergriffen bzw. erfasst werden. Die dargestellte wellenförmige Kontur der Aufnahme ist nur als ein Beispiel zu sehen. Es können andersartig ausgestaltete Aufnahmen vorgesehen sein, deren Form an die Form des jeweils aufzunehmenden Objekts angepasst ist. Besonders vorteilhaft ist es daher, wenn die Aufnahme 63 auswechselbar am Träger 29 befestigbar ist. Beispielsweise kann jede Aufnahme 61 an ihren beiden Enden eine jeweilige Bohrung 65 aufweisen, um die Aufnahme 61 mittels Schrauben an dem Träger 29 zu befestigen.

Wie vorstehend mit Bezug auf die Fig. 1 ausgeführt wurde, kann die Auflagefläche 39, 39' als eine ebene Oberfläche ausgestaltet sein. Die Auflagefläche 39, 39' kann auch als gummierte und/oder metallene Oberfläche und/oder als strukturierte Oberfläche ausgebildet sein. Ebenfalls kann vorgesehen sein, dass auf der Auflagefläche 39, 39' eine Anti-Haftbeschichtung angebracht ist.

Die Auflagefläche 39, 39' kann auch eine vorgeprägte Struktur, zum Beispiel durch Verwendung einer strukturierten Oberfläche oder eines Drahtgitters, aufweisen. Dadurch lässt sich die Auflagefläche 39, 39' und somit der Transportweg nutzen, um ein Muster in das Objekt 53 einzuprägen.

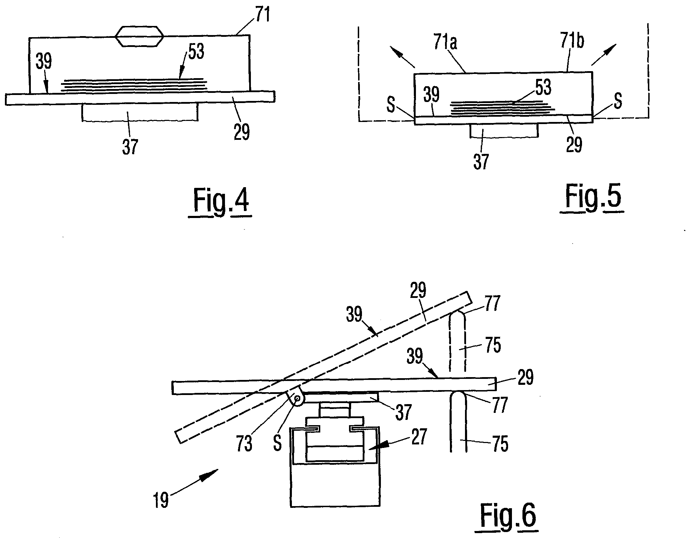

Fig. 4 zeigt eine Querschnittsansicht eines Trägers 29 mit einer auf der Auflagefläche 39 des Trägers 29 angeordneten Abdeckhaube 71. Die Abdeckhaube 71 umgibt ein auf der Auflagefläche 39 liegendes Objekt 53. In das eingeschlossene Volumen kann ein Inertgas eingebracht werden. Es kann auch möglich sein, dass das eingeschlossene Volumen evakuiert werden kann. Die Abdeckhaube 71 liegt auf der Auflagefläche 39 auf. Sie kann zum Beispiel mittels magnetischer Fixierungsmittel an der Auflagefläche 39 gehalten werden.

Fig. 5 zeigt eine abgewandelte Variante, bei welcher die Abdeckhaube 71 aus zwei Teilen 71a und 71b gebildet ist. Jedes Abdeckhaubenteil 71a, 71b ist um eine Schwenkachse S verschwenkbar am Träger 29 befestigt. Durch Verschwenken der Abdeckhaubenteile 71a, 71b um die jeweilige Schwenkachse S nach außen kann somit das von der Abdeckhaube 71 eingeschlossene Volumen nach oben hin geöffnet werden, insbesondere um das Objekt 53 auf den Träger 29 zu legen, oder um das Objekt 53 wieder vom Träger 29 zu entfernen. Die Abdeckhaubenteile 71a, 71b können auch mittels einer anderen Art von Fixierung am Träger 29 befestigt sein und andere Bewegungen ausführen, um ein Objekt 53 freizugeben.

Die Fig. 6 zeigt eine Querschnittsansicht eines Transportmovers 19 und des Bahnabschnitts 41. Bei dem Transportmover 19 ist der Träger 29 und damit die Auflagefläche 39 zwischen einer horizontalen Stellung und einer geneigten Stellung, die in Fig. 6 gestrichelt eingezeichnet ist, um eine Schwenkachse S verschwenkbar, die sich parallel zur Transportrichtung erstreckt, welche bei der Darstellung der Fig. 6 senkrecht zur Bildebene verläuft. Zur Erreichung der Verschwenkbarkeit um die Schwenkachse S ist der Träger 29 über ein Scharnier 73 mit dem Kopplungsabschnitt 37 gekoppelt. Die Auflagefläche 39 wird insbesondere zur Durchfahrung einer Kurve aus der horizontalen Stellung in die geneigte Stellung verstellt, so dass die Flächennormale der Auflagefläche 39 der Fliehkraft wenigstens teilweise entgegenwirken kann. Dadurch können Kurven mit höherer Geschwindigkeit durchfahren werden, ohne dass ein Objekt 53 verrutscht.

Zur Verstellung der Auflagefläche 39 bzw. des Trägers 29 ist seitlich neben dem Bahnabschnitt 41 eine Führungsschiene 75 angeordnet, die sich parallel zu dem Bahnabschnitt 41 erstreckt und deren Oberseite 77 eine Steuerkurve zur Verstellung des Trägers 29 bildet. Vor der Einfahrt in die Kurve weist die Oberseite 77 der Führungsschiene 75 eine derartige Höhe auf, dass die Unterseite des horizontal ausgerichteten Trägers 29 in Kontakt mit der Oberseite 77 gelangen kann (vgl. den mit durchgezogenen Linien eingezeichneten Träger 29 sowie die mit durchgezogenen Linien eingezeichnete Führungsschiene 75). Die Oberseite 77 der Führungsschiene 75 steigt dann längs der Bahn gesehen allmählich an, um den Träger 29 während seiner weiteren Bewegung um die Schwenkachse S zu verschwenken, bis die geneigte zweite Stellung erreicht ist (vgl. den gestrichelten Träger 29 und die gestrichelte Führungsschiene 75). Im Anschluss an die Kurve fällt dann die Oberseite 77 der Führungsschiene 75 wieder auf das Niveau vor der Einfahrt in die Kurve, wodurch der Träger 29 wieder in die horizontale Stellung gelangen kann. Dabei ist es vorteilhaft, wenn der Träger 29 in der geneigten Stellung in Richtung der horizontalen Stellung beispielsweise mittels einer Feder vorgespannt ist.

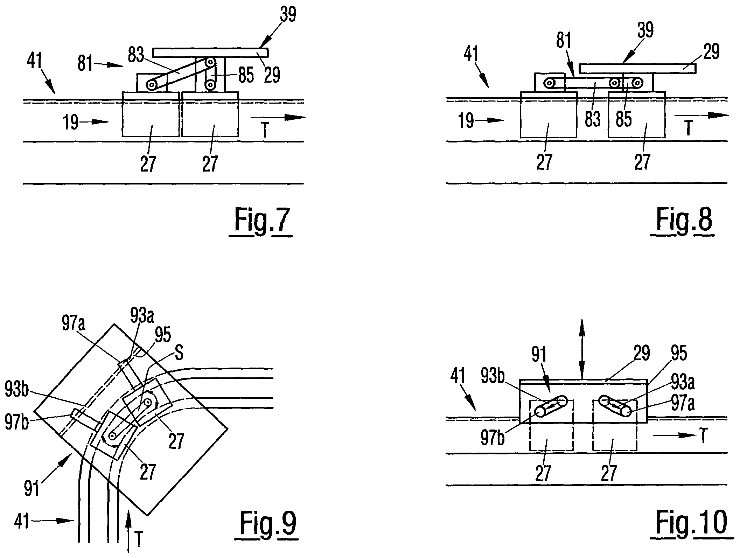

Die Fig. 7 und 8 zeigen eine abgewandelte Variante eines Transportmovers 19 mit einer zwischen einer horizontalen Stellung und einer dazu geneigten Stellung verstellbaren Auflagefläche 39. Der Transportmover 19 weist zwei hintereinander angeordnete Läufer 27 auf, welche über eine Verstelleinrichtung 81 miteinander gekoppelt sind.

Über die Verstelleinrichtung 81 erfolgt ferner eine Verstellung des Trägers 29 bzw. der Auflagefläche 39 zwischen der horizontalen Stellung und der dazu geneigten Stellung. Die Verstelleinrichtung 81 weist einen ersten Hebelarm 83 und einen zweiten Hebelarm 85 auf. Ein Ende des ersten Hebelarms 83 ist an einem der Läufer 27 angelenkt, während ein Ende des zweiten Hebelarms 85 an dem anderen Läufer 27 angelenkt ist. An ihrem jeweiligen anderen Ende sind die beiden Hebelarme 83, 85 miteinander gelenkig verbunden.

Zur Durchfahrung einer Kurve können die beiden Läufer 27 so angesteuert werden, dass sich der Abstand zwischen ihnen verkürzt (vgl. Fig. 7). Dies führt dazu, dass der zweite Hebelarm 85 nach oben verschwenkt wird. Dort gelangt der zweite Hebelarm 85 in Kontakt mit der Unterseite des Trägers 29. Der Träger 29 wird dadurch auf der Seite, welche in Querrichtung zur Transportrichtung T gesehen der Schwenkachse S gegenüberliegt, angehoben und in die geneigte Stellung gebracht. Nach Durchfahren der Kurve wird der Abstand zwischen den beiden Läufern 27 wieder größer, wie Fig. 8 zeigt. Dadurch verschwenkt der zweite Hebelarm 85 nach unten und der Träger 29 gelangt wieder in die horizontale Stellung.

Die Fig. 9 und 10 zeigen eine weitere Variante eines Transportmovers 19, bei dem der Träger 29 zwischen einer horizontalen Stellung und einer dazu geneigten Stellung verstellbar ist. Bei dieser Variante weist der Transportmover 19 wiederum zwei hintereinander angeordnete Läufer 27 auf. Wie in der Draufsicht der Fig. 9 gezeigt ist, ist auf einer Seite der beiden Läufer 27 eine Kulissenführung 91 vorgesehen, über welche der Träger 29 mit den Läufern 27 gekoppelt ist. Die Kulissenführung 91 weist zwei Kulissen 93a und 93b auf, welche in einer an der Unterseite des Trägers 29 angeordneten Platte 95 ausgebildet sind (siehe insbesondere Fig. 10). In jede Kulisse 93a, 93b greift ein jeweiliger Zapfen 97a, 97b ein. Dabei ist der Zapfen 93a an dem in Transportrichtung T vorauslaufenden Läufer 27 angeordnet, während der Zapfen 97b an dem in Transportrichtung T gesehen nachlaufenden Läufer 27 angeordnet ist.

Wie Fig. 10 zeigt, weist die Kulisse 97a einen in Transportrichtung T gesehen schräg nach unten weisenden Verlauf auf, während die Kulisse 97b einen schräg nach oben weisenden Verlauf aufweist. Bei einer Kurvenfahrt drehen sich die beiden Läufer 27 zueinander, wie in Fig. 9 schematisch gezeigt ist. Die Zapfen 97a, 97b werden dabei in der jeweiligen Kulisse 93a, 93b von den einander zugewandten Enden der Kulissen 93a, 93b zu den voneinander abgewandten Enden der Kulissen 93a, 93b bewegt. Durch den schrägen Verlauf der Kulissen 93a, 93b wird der Träger 29 auf der Seite der Kulissenführung 91 angehoben und somit um die Schwenkachse S verschwenkt und dabei in die geneigte Stellung gebracht.

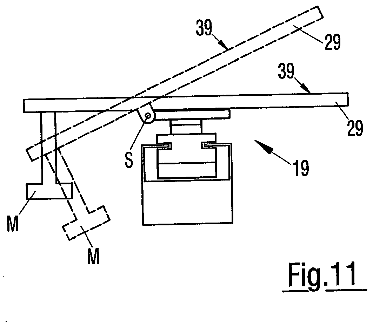

Fig. 11 zeigt eine weitere Variante eines Transportmovers 19, bei dem der Träger 29 bzw. die Auflagefläche 39 zwischen einer horizontalen Stellung und einer geneigten Stellung um eine zumindest im Wesentlichen parallel zur Transportrichtung T verlaufende Schwenkachse S verschwenkbar ist. An dem außerhalb der Schwenkachse S liegenden Randbereich der Unterseite des Trägers 29 ist eine Masse M angeordnet, die so dimensioniert ist, dass die Fliehkraft beim Durchfahren einer Kurve eine ausreichende Kraft erzeugt, um den Träger 29 bzw. die Auflagefläche 39 um die Schwenkachse S in die geneigte Stellung zu verschwenken. Die Masse M ist so dimensioniert, dass bei einer Geradeausfahrt die Masse M nicht ausreicht, um eine Verschwenkung des Trägers aus der horizontalen Stellung zu bewegen. Besonders vorteilhaft ist es dabei, wenn der Träger 29 in Richtung der horizontalen Stellung unter Federspannung steht, wodurch auch eine Rückstellung des Trägers 29 aus der geneigten Stellung erreicht werden kann, nachdem eine Kurve durchfahren ist und keine Fliehkräfte mehr wirken.

Eine Verstellung der Auflagefläche 39 bzw. des Trägers 29 um die Verschwenkachse kann auch mittels eines elektrischen oder pneumatischen Aktors erreicht werden, der im Transportmover 19 angeordnet ist (nicht gezeigt).

### Bezuqszeichenliste

- 19: Transportmover
- 27: Läufer
- 29: Träger
- 29': Träger
- 31: Halter
- 33: Führungsschiene
- 35: Schlitz
- 37: Kupplungsabschnitt
- 37': Kupplungsabschnitt
- 39: Auflagefläche
- 39': Auflagefläche
- 41: Bahnabschnitt
- 43: Stator
- 51: Schlitz
- 53: Objekt
- 55: Kante
- 57: Kennung
- 61: Aufnahme
- 63: Aufnahmeabschnitt
- 65: Bohrung
- 71: Abdeckhaube
- 71a: Abdeckhaubenteil
- 71b: Abdeckhaubenteil
- 73: Scharnier
- 75: Führungsschiene
- 77: Oberseite
- 81: Verstelleinrichtung
- 83: erster Hebelarm
- 85: zweiter Hebelarm
- 91: Kulissenführung
- 93a: Kulisse
- 93b: Kulisse
- 95: Platte
- 97a: Zapfen
- 97b: Zapfen
- S: Schwenkachse
- T: Transportrichtung
- M: Masse
- PM: Permanentmagnetanordnung

## Patentansprüche

1. Vorrichtung zum Transport von Objekten (53), insbesondere Portionen, die jeweils wenigstens eine von einem Lebensmittelprodukt, insbesondere mittels einer Aufschneidevorrichtung, insbesondere eines Hochgeschwindigkeitsslicers, abgetrennte Scheibe umfassen,
mit einer Bearbeitungseinrichtung, wie etwa einem Messer oder einer Handhabungseinrichtung,
mit wenigstens einem Transportmover (19), und
mit einem Bahnsystem für den Transportmover (19), in welchem der Transportmover (19) entlang wenigstens einer Bahn (41) in einer Transportrichtung (T) bewegbar ist, und
mit einer Steuereinrichtung zur Steuerung der Bewegungen des Transportmover (19) in dem Bahnsystem,
wobei der Transportmover (19) wenigstens einen Läufer (27) zum Zusammenwirken mit dem Bahnsystem und wenigstens einen am Läufer (27) angebrachten Träger (29, 29') für wenigstens ein Objekt (53) umfasst,
**dadurch gekennzeichnet, dass**
der Träger (29, 29') wenigstens eine Durchbrechung, insbesondere einen Schlitz (51), für einen Eingriff der Bearbeitungseinrichtung aufweist.

2. Vorrichtung nach Anspruch 1,
wobei die Durchbrechung als Schlitz (53) ausgebildet ist, wobei der Schlitz (51), insbesondere in Transportrichtung (T) oder senkrecht zur Transportrichtung (T), zumindest abschnittsweise durch eine Auflagefläche (39, 39') des Trägers (29, 29'), insbesondere in der Mitte der Auflagefläche (39, 39'), verläuft, auf welcher das Objekt (53) aufliegt.

3. Vorrichtung nach Anspruch 1 oder 2,
wobei der Träger (29, 29') eine Kante (55) aufweist, welche als eine zum Zusammenwirken mit einem Messer vorgesehene Gegenschneide ausgebildet ist, insbesondere wobei sich die Kante (55) an einem äußeren Rand der Auflagefläche (39, 39') des Trägers (29, 29') oder am Rand eines durch die Auflagefläche (39, 39') verlaufenden Schlitzes (51) oder einer Durchbrechung in der Auflagefläche (39, 39') befindet.

4. Vorrichtung nach einem der vorhergehenden Ansprüche,
wobei der Transportmover (19) wenigstens teilweise die Energie und/oder den Verfahrweg zur Ausführung eines Arbeitsschrittes einer Einrichtung, mit der der Transportmover (19) zusammenwirkt, bereitstellt, wobei es sich bei Energie insbesondere um Bewegungsenergie des Transportmovers (19) handelt.

5. Vorrichtung nach einem der vorhergehenden Ansprüche,
wobei der Träger (29, 29') zur Aktivierung einer, insbesondere den Träger (29, 29') beladenden oder entladenden, Station ausgebildet ist.

6. Vorrichtung nach einem der vorhergehenden Ansprüche,
wobei der Träger (29, 29'), insbesondere an der Auflagefläche (39, 39') für das Objekt (53), eine detektierbare Kennung (57) oder Markierung zum Erfassen der Position des Trägers (29, 29') und insbesondere der Position der Auflagefläche (39, 39') aufweist, insbesondere wobei dieser eine, insbesondere von einer Erfassungseinrichtung für die Markierung ansteuerbare, Verstelleinrichtung zum Einstellen der Position der Auflagefläche (39, 39') aufweist.

7. Vorrichtung nach Anspruch 6,
wobei die Vorrichtung eine Detektionseinrichtung zum Detektieren der an dem Transportmover (19) angebrachten oder ausgebildeten Kennung (57) oder Markierung umfasst, insbesondere wobei diese eine Positioniereinrichtung umfasst, welche dazu ausgebildet ist, anhand der detektierten Kennung (57) oder Markierung des Transportmovers (19) die Ist-Position der Auflagefläche des Trägers (29, 29') des Transportmovers (19) zu bestimmen und diese in eine Soll-Position zu bringen, falls die Ist-Position von der Soll-Position abweicht und/oder wobei diese dazu ausgebildet ist, die detektierte Kennung (57) oder Markierung einer Einrichtung, welche mit der Kennung (57) oder Markierung assoziiert ist, zuzuordnen, und/oder die Einrichtung in Abhängigkeit von der Detektion der Kennung (57) oder Markierung zu aktivieren.

8. Vorrichtung nach einem der vorhergehenden Ansprüche,
wobei der Träger (29, 29') eine Aufnahme (61) für wenigstens ein Objekt (53) aufweist, wobei die Aufnahme (61), insbesondere deren Form, an das Objekt (53), insbesondere an dessen Form, angepasst ist,

9. Vorrichtung nach Anspruch 8,
wobei die Aufnahme (61) auswechselbar am Träger (29, 29') befestigbar ist, insbesondere auf der Auflagefläche (39, 39') des Trägers (29, 29') oder wobei die Aufnahme (61) mitsamt Träger (29, 29') auswechselbar an zumindest einem Läufer (27) anbringbar oder angebracht ist.

10. Vorrichtung nach einem der vorhergehenden Ansprüche,
wobei die Auflagefläche (39, 39') des Trägers (29, 29') auswechselbar an einer darunterliegenden Halterung, insbesondere eine darunterliegende Oberfläche, des Trägers (29, 29') angeordnet oder anordenbar ist, wobei, bevorzugt, die Auflagefläche (39, 39') mittels einer Schnellbefestigung oder einer Selbstklemmung an der Halterung befestigbar ist.

11. Vorrichtung nach einem der vorhergehenden Ansprüche,
wobei die Auflagefläche (39, 39') des Trägers (29, 29') dazu ausgebildet ist, eine Auffangfläche bereitzustellen und/oder ein Herablaufen von Flüssigkeit eines teilweise flüssigen Objekts von der Auflagefläche (39, 39') zu verhindern, insbesondere wobei die Auflagefläche (39, 39') von einem umlaufenden, gegenüber der Auflagefläche (39, 39') erhöhten Rand begrenzt wird, und/oder dass die Auflagefläche (39, 39') von einer wannenartig ausgestalteten Trägeroberfläche gebildet wird und/oder dass die Auflagefläche (39, 39') wenigstens eine verschließbare Ablauföffnung aufweist.

12. Vorrichtung nach einem der vorhergehenden Ansprüche,
wobei der Transportmover (19) zur Temperierung der Auflagefläche (39, 39') des Trägers (29, 29') eine Wärme- und/oder Kälteeinrichtung aufweist, insbesondere wobei die Wärme- und/oder Kälteeinrichtung einen Wärme- und/oder Kältespeicher umfasst, welcher vorzugsweise am Träger (29, 29'), insbesondere unter der Auflagefläche (39, 39'), angeordnet ist.

13. Vorrichtung nach einem der vorhergehenden Ansprüche,
wobei der Transportmover (19) eine Abdeckhaube (71) zur Abdeckung der Auflagefläche (39, 39') des Trägers (29, 29') aufweist, insbesondere wobei dieser eine Einrichtung zur Erzeugung eines Vakuums in dem Volumen, welches die Abdeckhaube (71) und die Auflagefläche (39, 39') umschließen, aufweist und/oder wobei
dieser eine Einrichtung zur Einbringung eines Gases, insbesondere eines Inertgases, in das Volumen, welches die Abdeckhaube (71) und die Auflagefläche (39, 39') umschließen, aufweist und/oder wobei dieser eine Einrichtung zur Überwachung eines Zustands, insbesondere einer Temperatur und/oder eines Vakuums, in dem Volumen, welches die Abdeckhaube (71) und die Auflagefläche (39, 39') umschließen, aufweist.

14. Vorrichtung nach einem der vorhergehenden Ansprüche,
wobei der Transportmover (19) eine Beleuchtung, vorzugsweise für den Träger (29, 29'), insbesondere für dessen Auflagefläche (39, 39'), aufweist, wobei, bevorzugt, die Beleuchtung unter der Auflagefläche (39, 39') des Trägers (29, 29') angeordnet ist.

15. Vorrichtung nach einem der vorhergehenden Ansprüche,
wobei wenigstens eine Teilstrecke der Bahn (41) durch eine Einhausung verläuft und/oder, wobei diese wenigstens eine Einrichtung, wie etwa einen Greifroboter oder eine Einhausung einer Teilstrecke der Bahn (41), aufweist, welche klimatisiert betreibbar ist.

## Claims

1. An apparatus for transporting objects (53), in particular portions, which each comprise at least one slice cut off from a food product, in particular by means of a slicing apparatus, in particular by means of a high-speed slicer, said apparatus comprising a processing device such as a blade or a handling device;
at least one transport mover (19);
a path system for the transport mover (19) in which the transport mover (19) is movable in a transport direction (T) along at least one path (41); and
a control device for controlling the movements of the transport movers (19) in the path system,
wherein the transport mover (19) comprises at least one runner (27) for cooperating with the path system and at least one carrier (29, 29') attached to the runner (27) for at least one object (53),
**characterized in that**
the carrier (29, 29') has at least one opening, in particular a slot (51), for an engagement of the processing device.

2. An apparatus in accordance with claim 1,
wherein the opening is formed as a slot (51), wherein the slot (51), in particular in the transport direction (T) or perpendicular to the transport direction (T), extends at least sectionally through a support surface (39, 39') of the carrier (29, 29'), in particular at the center of the support surface (39, 39'), on which the object (53) is disposed.

3. An apparatus in accordance with claim 1 or claim 2,
wherein the carrier (29, 29') has an edge (55) which is formed as a counter-blade provided for cooperating with a blade, in particular wherein the edge (55) is located at an outer margin of the support surface (39, 39') of the carrier (29, 29') or at the margin of a slot (51) extending through the support surface (39, 39') or of an opening in the support surface (39, 39').

4. An apparatus in accordance with any one of the preceding claims,
wherein the transport mover (19) at least partly provides the energy and/or the travel path for performing a workstep of a device with which the transport mover (19) cooperates, wherein the energy is in particular kinetic energy of the transport mover (19).

5. An apparatus in accordance with any one of the preceding claims,
wherein the carrier (29, 29') is configured for an activation of a station which in particular loads or unloads the carrier (29, 29').

6. An apparatus in accordance with any one of the preceding claims,
wherein the carrier (29, 29'), in particular at the support surface (39, 39') for the object (53), has a detectable identifier (57) or marking for detecting the position of the carrier (29, 29') and in particular the position of the support surface (39, 39'), in particular wherein said carrier (29, 29') has an adjustment device, which can in particular be controlled by a detection device for the marking, for setting the position of the support surface (39, 39').

7. An apparatus in accordance with claim 6,
wherein the apparatus comprises a detection device for detecting the identifier (57) or marking applied to or formed at the transport mover (19), in particular wherein said apparatus comprises a positioning device which is configured to determine the actual position of the support surface of the carrier (29, 29') of the transport mover (19) on the basis of the detected identifier (57) or marking of the transport mover (19) and to bring said actual position into a desired position if the actual position differs from the desired position, and/or wherein said apparatus is configured to associate the detected identifier (57) or marking with a device which is associated with the identifier (57) or marking and/or to activate the device in dependence on the detection of the identifier (57) or marking.

8. An apparatus in accordance with any one of the preceding claims,
wherein the carrier (29, 29') has a receiver (61) for at least one object (53), wherein the receiver (61), in particular its shape, is adapted to the object (53), in particular to its shape.

9. An apparatus in accordance with claim 8,
wherein the receiver (61) is replaceably fastenable to the carrier (29, 29'), in particular on the support surface (39, 39') of the carrier (29, 29'), or wherein the receiver (61) together with the carrier (29, 29') is replaceably attachable or attached to at least one runner (27).

10. An apparatus in accordance with any one of the preceding claims,
wherein the support surface (39, 39') of the carrier (29, 29') is or can be replaceably arranged at a holder disposed therebeneath, in particular a surface disposed therebeneath, of the carrier (29, 29'), wherein, preferably, the support surface (39, 39') can be fastened to the holder by means of a quick fastening or a self-clamping.

11. An apparatus in accordance with any one of the preceding claims,
wherein the support surface (39, 39') of the carrier (29, 29') is configured to provide a collection surface and/or to prevent a running down of liquid of a partly liquid object from the support surface (39, 39'), in particular wherein the support surface (39, 39') is bounded by a peripheral margin which is raised with respect to the support surface (39, 39'), and/or in that the support surface (39, 39') is formed by a carrier surface which is designed in a tub-like manner, and/or in that the support surface (39, 39') has at least one closable outflow opening.

12. An apparatus in accordance with any one of the preceding claims,
wherein the transport mover (19) has a heating and/or cooling device for the temperature control of the support surface (39, 39') of the carrier (29, 29'), in particular wherein the heating and/or cooling device comprises a heat and/or cold reservoir which is preferably arranged at the carrier (29, 29'), in particular below the support surface (39, 39').

13. An apparatus in accordance with any one of the preceding claims,
wherein the transport mover (19) has a cover hood (71) for covering the support surface (39, 39') of the carrier (29, 29'), in particular wherein said transport mover (19) has a device for generating a vacuum in the volume which is enclosed by the cover hood (71) and the support surface (39, 39'), and/or wherein
said transport mover (19) has a device for introducing a gas, in particular an inert gas, into the volume which is enclosed by the cover hood (71) and the support surface (39, 39'), and/or wherein said transport mover (19) has a device for monitoring a state, in particular of a temperature and/or of a vacuum, in the volume which is enclosed by the cover hood (71) and the support surface (39, 39').

14. An apparatus in accordance with any one of the preceding claims,
wherein the transport mover (19) has an illumination, preferably for the carrier (29, 29'), in particular for its support surface (39, 39'), wherein, preferably, the illumination is arranged below the support surface (39, 39') of the carrier (29, 29').

15. An apparatus in accordance with any one of the preceding claims,
wherein at least one part line of the path (41) extends through a housing, and/or wherein said apparatus has at least one device, such as a gripping robot or a housing of a part line of the path (41), which can be operated in an air-conditioned manner.

## Revendications

1. Dispositif pour transporter des objets (53), en particulier des portions, comprenant chacun(e) au moins une tranche séparée d'un produit alimentaire, en particulier au moyen d'un dispositif de tranchage, en particulier au moyen d'une trancheuse à haute performance, comportant un moyen de traitement, tel qu'un couteau ou un moyen de manipulation, au moins un organe de transport (19), et
un système de voie pour l'organe de transport (19), dans lequel l'organe de transport (19) est mobile le long d'au moins une voie (41) dans une direction de transport (T), et
un moyen de commande pour commander les mouvements de l'organe de transport (19) dans le système de voie,
l'organe de transport (19) comprenant au moins un curseur (27) pour coopérer avec le système de voie et au moins un support (29, 29') monté sur ledit curseur (27) et destiné à au moins un objet (53),
**caractérisé en ce que**
le support (29, 29') présente au moins une traversée, en particulier une fente (51), destinée à l'intervention du moyen de traitement.

2. Dispositif selon la revendication 1,
dans lequel la traversée est réalisée sous forme de fente (51), et la fente (51) traverse, en particulier dans la direction de transport (T) ou perpendiculairement à la direction de transport (T), au moins localement une surface d'appui (39, 39') du support (29, 29'), en particulier au centre de la surface d'appui (39, 39'), sur laquelle s'appuie l'objet (53).

3. Dispositif selon la revendication 1 ou 2,
dans lequel le support (29, 29') présente une arête (55) qui est réalisée sous forme de tranchant antagoniste destiné à coopérer avec un couteau, et
en particulier, l'arête (55) est située sur un bord extérieur de la surface d'appui (39, 39') du support (29, 29') ou sur le bord d'une fente (51) traversant la surface d'appui (39, 39') ou d'une traversée dans la surface d'appui (39, 39').

4. Dispositif selon l'une des revendications précédentes,
dans lequel l'organe de transport (19) fournit au moins partiellement l'énergie et/ou la course de déplacement pour effectuer une étape de travail d'un moyen avec lequel l'organe de transport (19) coopère, l'énergie étant en particulier l'énergie de mouvement de l'organe de transport (19).

5. Dispositif selon l'une des revendications précédentes,
dans lequel le support (29, 29') est réalisé pour activer une station destinée en particulier à charger ou à décharger le support (29, 29').

6. Dispositif selon l'une des revendications précédentes,
dans lequel le support (29, 29') possède, en particulier sur la surface d'appui (39, 39') pour l'objet (53), un identifiant ou repère détectable (57) destiné à détecter la position du support (29, 29') et en particulier la position de la surface d'appui (39, 39'),
en particulier celui-ci comprenant un moyen de déplacement pilotable par un moyen de détection du repère et destiné à régler la position de la surface d'appui (39, 39').

7. Dispositif selon la revendication 6,
dans lequel le dispositif comprend un moyen de détection pour détecter l'identifiant (57) ou le repère attaché ou réalisé sur l'organe de transport (19),
en particulier celui-ci comprenant un moyen de positionnement qui est réalisé pour déterminer la position réelle de la surface d'appui du support (29, 29') de l'organe de transport (19) sur la base de l'identifiant (57) ou du repère détecté de l'organe de transport (19) et pour l'amener dans une position de consigne si la position réelle s'écarte de la position de consigne, et/ou celui-ci étant réalisé pour attribuer l'identifiant (57) ou le repère détecté à un moyen associé à l'identifiant (57) ou au repère, et/ou pour activer ledit moyen en fonction de la détection de l'identifiant (57) ou du repère.

8. Dispositif selon l'une des revendications précédentes,
dans lequel le support (29, 29') présente un logement (61) pour au moins un objet (53), le logement (61), en particulier sa forme, étant adapté(e) à l'objet (53), en particulier à sa forme.

9. Dispositif selon la revendication 8,
dans lequel le logement (61) peut être fixé de façon interchangeable sur le support (29, 29'), en particulier sur la surface d'appui (39, 39') du support (29, 29'), ou le logement (61), y compris le support (29, 29'), peut être monté ou est monté de façon interchangeable sur au moins un curseur (27).

10. Dispositif selon l'une des revendications précédentes,
dans lequel la surface d'appui (39, 39') du support (29, 29') est disposée ou peut être disposée de façon interchangeable sur une monture du support (29, 29') située au-dessous, en particulier sur une surface située au-dessous, et la surface d'appui (39, 39') peut être fixée à la monture à l'aide d'une fixation rapide ou d'un auto-serrage.

11. Dispositif selon l'une des revendications précédentes,
dans lequel la surface d'appui (39, 39') du support (29, 29') est réalisée pour fournir une surface de collecte et/ou pour empêcher un liquide d'un objet partiellement liquide de s'écouler de la surface d'appui (39, 39'), en particulier, la surface d'appui (39, 39') est délimitée par un bord circonférentiel qui est surélevé par rapport à la surface d'appui (39, 39'), et/ou la surface d'appui (39, 39') est formée par une surface de support en forme d'auge, et/ou
la surface d'appui (39, 39') présente au moins une ouverture de drainage refermable.

12. Dispositif selon l'une des revendications précédentes,
dans lequel l'organe de transport (19) comporte un moyen de chauffage et/ou de refroidissement pour tempérer la surface d'appui (39, 39') du support (29, 29'),
en particulier, le moyen de chauffage et/ou de refroidissement comprend un accumulateur de chaleur et/ou de froid qui est de préférence disposé sur le support (29, 29'), en particulier sous la surface d'appui (39, 39').

13. Dispositif selon l'une des revendications précédentes,
dans lequel l'organe de transport (19) comprend un capot de couverture (71) pour couvrir la surface d'appui (39, 39') du support (29, 29'),
en particulier, celui-ci comprenant un moyen pour générer un vide dans le volume enfermé par le capot de couverture (71) et par la surface d'appui (39, 39'), et/ou
celui-ci comprend un moyen d'introduction d'un gaz, en particulier d'un gaz inerte, dans le volume enfermé par le capot de couverture (71) et par la surface d'appui (39, 39'), et/ou
celui-ci comprend un moyen de surveillance d'un état, en particulier d'une température et/ou d'un vide, dans le volume enfermé par le capot de couverture (71) et par la surface d'appui (39, 39').

14. Dispositif selon l'une des revendications précédentes,
dans lequel l'organe de transport (19) comprend un éclairage, de préférence pour le support (29, 29'), en particulier pour sa surface d'appui (39, 39'), et, de préférence, l'éclairage est disposé sous la surface d'appui (39, 39') du support (29, 29').

15. Dispositif selon l'une des revendications précédentes,
dans lequel au moins un trajet partiel de la voie (41) s'étend à travers une enceinte, et/ou
celui-ci comprend au moins un moyen, tel qu'un robot de préhension ou une enceinte d'un trajet partiel de la voie (41), qui peut fonctionner de manière climatisée.
